(19) Europäisches Patentamt

European Patent Office

Office européen des brevets

(11) Publication number: **0 256 699 B1**

(12) **EUROPEAN PATENT SPECIFICATION**

(45) Date of publication of patent specification: **18.03.92**  (51) Int. Cl.⁵: **B60S 3/00**

(21) Application number: **87306652.6**

(22) Date of filing: **28.07.87**

---

(54) **Internal body cleaner.**

---

(30) Priority: **05.08.86 GB 8619129**

(43) Date of publication of application:
**24.02.88 Bulletin 88/08**

(45) Publication of the grant of the patent:
**18.03.92 Bulletin 92/12**

(84) Designated Contracting States:
**AT BE CH DE ES FR GB GR IT LI LU NL SE**

(56) References cited:
**EP-A- 0 153 455**
**US-A- 3 973 988**
**US-A- 4 106 516**
**US-A- 4 141 374**

(73) Proprietor: **SCHAAFF & MEURER GmbH**
**Rheintörchenstrasse 40**
**W-4100 Duisburg 1(DE)**

(72) Inventor: **Harrison, Kenneth Hall**
**28 York Road**
**Edinburgh EH5 3AG Scotland(GB)**
Inventor: **James, Alec Patrick**
**30 Holly Lane**
**Erdington Birmingham B24 9JS(GB)**

(74) Representative: **Hands, Horace Geoffrey et al**
**GEORGE FUERY & CO Whitehall Chambers**
**23 Colmore Row**
**Birmingham B3 2BL(GB)**

EP 0 256 699 B1

# Description

This invention relates to apparatus for cleaning the interior of a vehicle body of the type disclosed in US-A-4 131 374. The need for such apparatus arises from the use of large box-like road transport vehicles (often articulated) for transporting food, for reasons of hygiene.

A known apparatus for these purposes comprises a fixed lance provided with spray jets and supported in cantilever fashion parallel to the ground. The vehicle rear doors are opened, and the vehicle is backed so that the lance extends into the body. The efficiency of the wash depends upon the vehicle being driven at a constant speed whilst it is backed, and in addition to the need to maintain a constant speed and an accurate direction, is the need to travel for a precise distance, depending upon the length of the body; for if the vehicle goes too far the lance spears the cab : if not far enough not all is cleaned. This makes the operation difficult, and additionally the apparatus occupies considerable space even when not in use.

It is also known from USP A-4141374 to provide a trolley supplied from a fixed structure with water for cleaning purposes via a hose, and driven by an electric motor supplied by an electric cable, the hose and cable being unwound from a reel which is motor driven and mounted on the fixed structure, as the trolley drives along the vehicle interior. When the trolley reaches the end the electric motors are reversed to drive the trolley back to the start point and rewind the cable and hose. This arrangement has fixed position side wheels or guide rollers spaced apart a distance which allows the trolley to enter the narrowest vehicle. In this arrangement the vehicle must be relatively precisely positioned in order that the self-propelled trolley may travel the length of the vehicle. If the vehicle is badly positioned, the trolley will hit one side wall and although the guide rollers may allow it to rub along the vehicle side this may not be satisfactory. Moreover, the electric motor and its associated switch gear may be unreliable in the sodden environment where large volumes of water are sprayed in all directions with intentional splashing. The object of the invention is therefore to provide an arrangement which solves these problems, avoiding the need for accurate positioning of the vehicle, and also which is simpler and potentially more reliable. Such an object is achieved by providing an apparatus of the type disclosed in US-A-4 131 374 with the features defined in the characterising portion of claim 1.

Accordingly, we connect the trolley to the fixed structure by a scissors linkage with a pivot on the fixed structure. If the vehicle is badly aligned, the scissors can pivot to allow the trolley to become aligned. Moreover we provide lateral wheels on folding links arranged to be displaced outwardly to contact both side walls and maintain the desired alignment.

The spray heads may be mounted on a rotary arm to ensure that all of the internal surfaces of the side walls roof and floor of the vehicle are cleaned, and the arm may be provided with additional heads to clean the end wall. Appropriate valves and controls are provided so that for example one's of the spray heads are directed to provide a cleansing fluid during movement from the retracted position to an end position, others of the spray heads are used to clean the end wall in that position, and then possibly a rinse fluid is directed first against the end wall then against the side floor and roof whilst the trolley is retracted. A number of journeys may be made by the trolley and in a last retraction step, air may be directed against the washed surfaces from the spray heads to speed the drying.

In this event it will be appreciated that the same hose which is used to supply air for propulsion in one direction supplies the air for drying when the trolley is hauled in the opposite direction.

One presently preferred embodiment of the invention is more particularly described with reference to the accompanying drawings wherein:-

Figure 1 is a fragmentary and somewhat diagrammatic side elevation showing the apparatus ready for use;

Figure 2 is a similar view showing the apparatus in use;

Figure 3 is a plan view in the Figure 2 position;

Figure 4 is an enlarged and more fragmentary elevation; and

Figure 5 is a view in the direction of the arrow A Figure 1

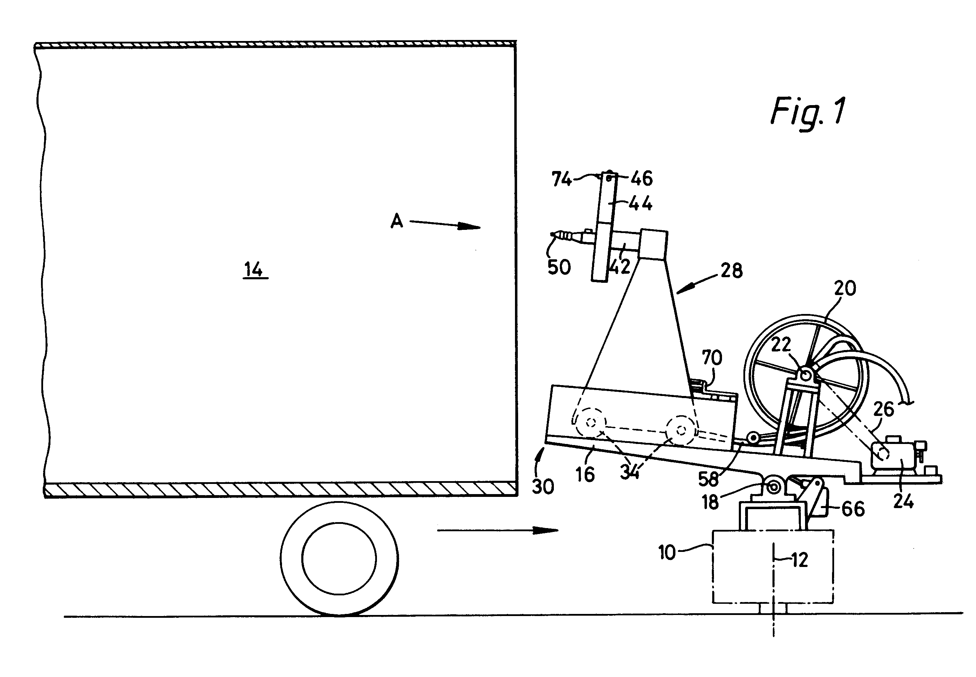

Turning now to the drawings, Figure 1 shows a support 10 which is rotatable about a vertical axis 12 to enable the apparatus to be aligned with the vehicle which is diagrammatically shown by reference 14. Platform 16 is pivoted on axis 18 and mounts two coaxial hose reels 20 rotatable on axis 22. The reels are driven by motor 24 via for example chain 26. Both hoses are connected to trolley 28 which is shown in the fully retracted position in Figure 1 and is carried on the platform. The latter is tilted so that the front end 30 of the platform is above the deck or floor height of the vehicle.

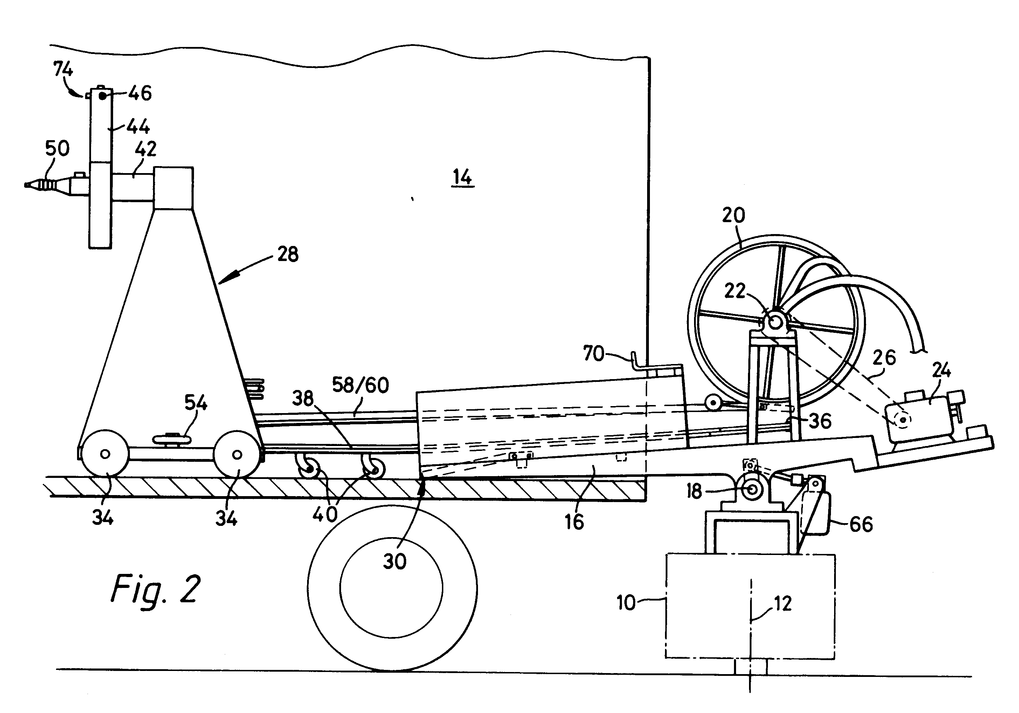

Figure 2 shows the apparatus in use. The platform is tilted downwardly so that the front end 30 rests on the floor or deck of the vehicle. The trolley has wheels 34 of which at least one is driven by an air motor supplied by one of the hoses. The trolley is connected to the fixed structure at a vertical pivot 36 by means of a scissor linkage 38 supported by castors 40. The trolley has a shaft 42 and arm 44 with a counter weight at one end and carries spray heads 46. When the arm is rotated, windmill fashion, spray is directed against the walls, floor and roof. The trolley also has a probe 50 to contact the far end (not shown) of the vehicle interior at the end of a working stroke which can be of variable length according to the length of the vehicle.

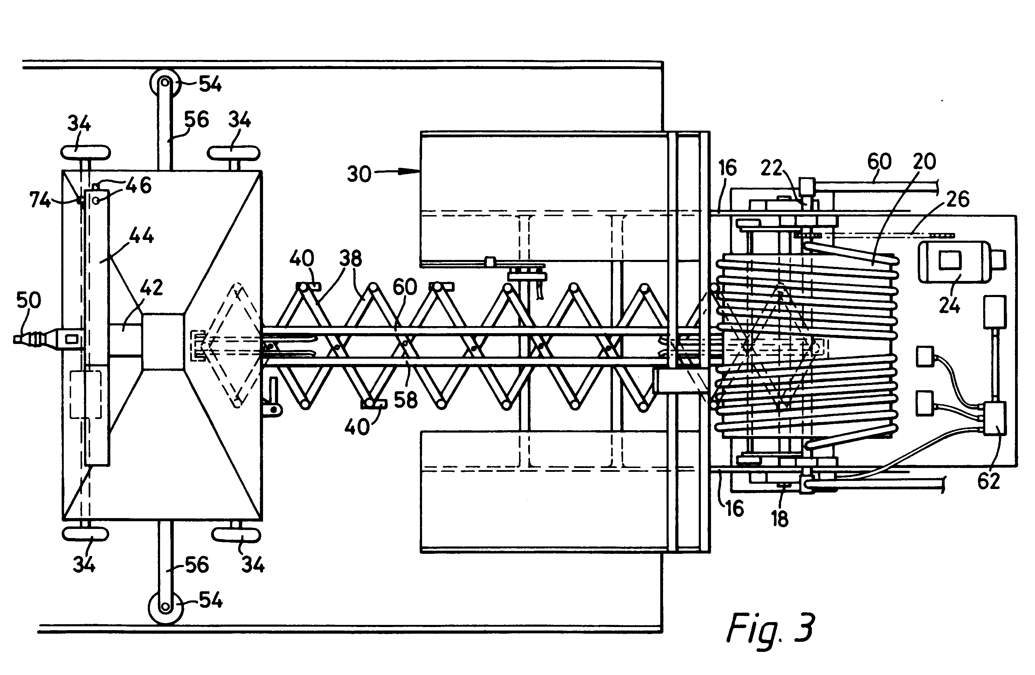

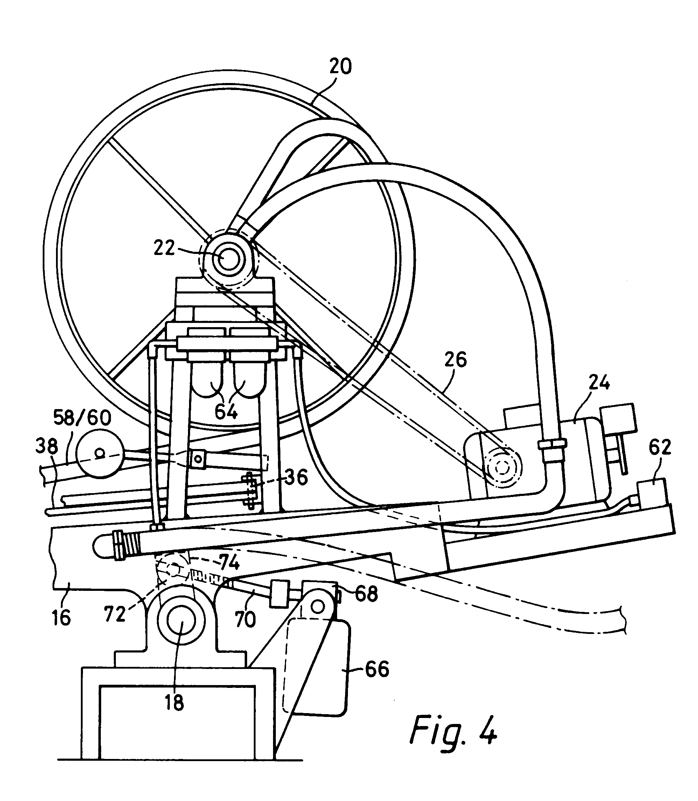

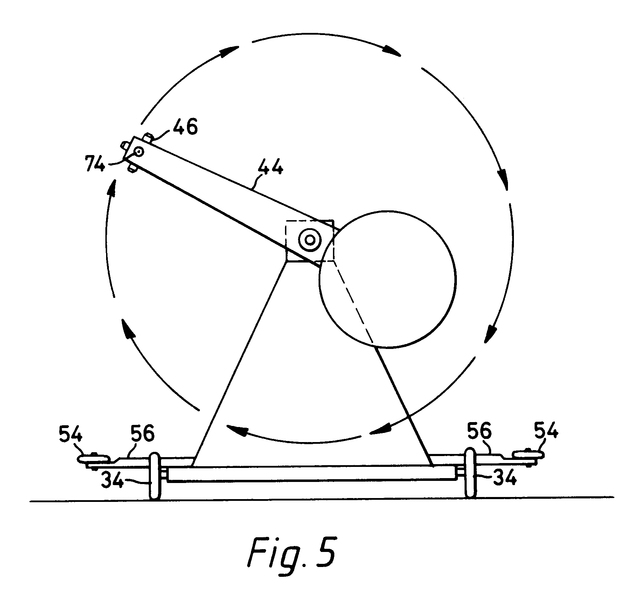

Figure 3 and also Figure 5 show laterally projecting wheels 54 mounted on links 56 to contact the walls of the vehicle to guide the trolley laterally. It also shows the air and water hoses 58,60 extending from the hose reels to the trolley. Water is supplied via lines 60 which includes connections to meter additives such as detergent, and the air line is supplied via a control valve 62 which can control the air rate for different purposes. As best seen in Figure 4, the air line also includes filters.

Platform tilting for the purpose explained, may be via a pneumatic cylinder, or as shown in Figure 4 by a motor 66 driving worm reduction unit 68 to rotate screw-shaft 70 in nut 72 which is journalled on a crank 74 angularly fast with the platform.

In operation, the vehicle is positioned adjacent the apparatus (Figure 1) and then the platform is tilted downwardly. Contact between platform and vehicle floor may be sensed by a pressure switch or proximity switch to stop the motor 66. This enables the apparatus to cope with different floor heights, but possibly an additional adjustment may be provided in the form of a main telescopically adjustable ram on axis 12 to raise and lower the whole apparatus.

Air and water are supplied to the hose reels and the air drives the trolley motor to send the trolley down the platform and along the vehicle. The lateral wheels 54 may be inwardly folded, by way of their linkage, whilst the trolley is on the platform and be held in place by flange 70 on the platform. The linkage may be operated by a pneumatic cylinder for example where an appropriately located switch on the trolley clears one flanges 70 or vice a versa. The laterally extending wheels centre the trolley if necessary. Moreover, if the vehicle is out of line, the pivots 36 and 12 allow the whole structure to turn and become substantially self aligning. If desired the linkage may include springs so that the wheels are automatically extended towards the walls.

During the movement along the vehicle, the arm 44 is rotated by an air motor, in windmill fashion. The spray heads are fed with water or any desired cleansing fluid, and the whole of the interior can be washed. The efficiency of wash may depend upon the rate of travel of the trolley which can be adjusted for example by using a drive to the hose reels which control their speed, so that they exert a drag on the trolley and control its speed.

As the trolley approaches the far end wall of the vehicle, the probe contacts that wall. The probe is telescopic to avoid damage. It operates to send signals which first cause the trolley drive motor to stop so that the trolley dwells at the far end position. It also causes the valves directing supply of fluid to the spray heads 46 to be changed over so that for example fluid is directed to the spray heads 74 on the front face of the arm for the purpose of washing the end wall. After an appropriate delay, further valves may be operated to change the detergent wash to a rinse, first via the spray heads 74 for the end wall, and then via the spray heads 46. The motor driving the hose reels, which was stopped at the time when the drive to the trolley was stopped, is then restarted but in the opposite direction (by a further signal), so that the hoses are rewound and the trolley is hauled back along the length of the vehicle whilst the arm continues to rotate and with rinse water (for example) from the spray heads 46 for the roof, floor and side walls.

Various different cleaning cycles are possible using water as a prewash, as a main wash or as a rinse, and/or using air directly from the spray heads to speed the drainage.

If the trolley is to make more than one complete or partial journey to and fro along the vehicle, reversal may be effected by proximity switches detecting the approach of the trolley. At the end of the programme the trolley is hauled back to the fully retracted position, and the lateral wheel are retracted by operation of the linkage. The platform is then tilted back to the Figure 1 position before the vehicle is driven off.

## Claims

1. Apparatus for cleaning the interior of a stationery vehicle (14) comprising a fixed structure (10) provided with a motorised hose reel (20), a wheeled trolley (28) adapted to run along the floor of the vehicle being cleaned, one or more spray heads (46,74) for cleaning fluids connected to a hose (60) and mounted on the trolley and means for projecting the trolley substantially linearly away from a retracted position adjacent to the fixed structure for passage along the interior of the stationary vehicle whilst said hose is unwound and for subsequently returning the trolley and heads to the retracted position whilst the hose is rewound, characterised in that the trolley is connected to said fixed structure (10) by a scissors linkage (38) and via a single pivot point (36) on the fixed structure, and in that said trolley is provided with lateral wheels (54) mounted on links (56) arranged for movement between an inwardly folded position and an outward position for contact with the vehicle being cleaned.

2. Apparatus as claimed in Claim 1 wherein the trolley has one or more of its wheels driven by an air motor supplied via a second hose (58) which is unwound from another reel (20) in the course of the travel of the trolley away from the retracted position, and in that said air motor is stopped by contact of a probe (50) on the trolley with an end wall of the vehicle, said probe also causing reversal of the hose reel motor (24) to rewind both hoses and haul the trolley to the retracted position.

3. Apparatus as claimed in Claim 2 wherein the trolley includes an arm which is rotatable by a second air motor about the axis of movement of the trolley away from the fixed structure, the arm carrying one or more spray heads, and said hose reel motor (24) is a third air motor.

4. Apparatus as claimed in claim 1 wherein the fixed structure includes a platform receiving the trolley when in the retracted position, and the platform is pivoted on a horizontal axis.

**Revendications**

1. Appareil pour nettoyer l'intérieur d'un véhicule en stationnement (14) qui comprend une structure fixe (10) équipée d'un tambour d'enroulement pour tuyau (20) actionné par moteur, un chariot sur roues (28) destiné à se déplacer le long du plancher du véhicule en cours de nettoyage, une ou plusieurs têtes d'arrosage (46, 74) pour fluides de nettoyage, qui sont reliées à un tuyau (60) et sont montées sur le chariot, et des moyens pour faire déplacer le chariot de façon sensiblement linéaire en s'éloignant d'une position rétractée adjacente à la structure fixe, pour le faire passer le long de l'intérieur du véhicule en stationnement alors que ledit tuyau se déroule, puis pour ramener ensuite le chariot et les têtes d'arrosage jusqu'à la position rétractée alors que le tuyau se réenroule, caractérisé en ce que le chariot est relié à ladite structure fixe (10) par une tringlerie à parallélogrammes déformables (38) et par l'intermédiaire d'un point d'articulation unique (36) situé sur la structure fixe, et en ce que ledit chariot comporte des roues latérales (54) montées sur des biellettes (56) conçues pour se déplacer entre une position où elles sont repliées vers l'intérieur et une position vers l'extérieur dans laquelle elles sont en contact avec le véhicule en cours de nettoyage.

2. Appareil selon la revendication 1, dans lequel une ou plusieurs roues du chariot sont entraînées par un moteur à air comprimé alimenté par l'intermédiaire d'un second tuyau (58) qui se déroule d'un autre tambour (20) lors du déplacement du chariot en s'éloignant de la position rétractée, et dans lequel l'arrêt dudit moteur à air comprimé est commandé par le contact d'une sonde (50) portée par le chariot avec une paroi d'extrémité du véhicule, ladite sonde commandant aussi l'inversion du moteur (24) du tambour d'enroulement de tuyau pour réenrouler les deux tuyaux et tirer le chariot jusqu'à sa position rétractée.

3. Appareil selon la revendication 2, dans lequel le chariot comprend un bras qui peut tourner, sous l'action d'un second moteur à air comprimé, autour de l'axe du déplacement du chariot s'éloignant de la structure fixe, le bras portant une ou plusieurs têtes d'arrosage, et dans lequel ledit moteur (24) du tambour d'enroulement de tuyau est constitué par un troisième moteur à air comprimé.

4. Appareil selon la revendication 1, dans lequel la structure fixe comprend une plate-forme qui reçoit le chariot dans la position rétractée de celui-ci, cette plate-forme étant articulée autour d'un axe horizontal.

**Patentansprüche**

1. Vorrichtung zur Reinigung des Innenraumes eines stationären Fahrzeuges (14), enthaltend
   - eine feststehende Struktur (10) mit einer motorbetriebenen Schlauchwinde (20),
   - einen mit Rädern versehenen Wagen (28), der längs des Bodens des zu reinigenden Fahrzeuges beweglich ist,
   - einen oder mehrere Sprühköpfe (46, 74) für Reinigungsflüssigkeit, die mit einem Schlauch (16) verbunden und auf dem Wagen befestigt sind,
   - und eine Einrichtung zum im wesentlichen linearen Versetzen des Wagens aus einer an die feststehende Struktur angrenzenden, zurückgezogenen Position zur Bewegung längs des Innenraumes des stationären Fahrzeuges, währenddessen der Schlauch abgewickelt wird, und zum anschließenden Zurückführen des Wagens und der Köpfe in die zurückgezogene Position, währenddessen der Schlauch aufgewickelt wird, dadurch gekennzeichnet, daß
   - der Wagen mit der feststehenden Struktur (10) durch ein Scherengestänge (38) und über einen einzigen Drehpunkt (36) auf der feststehenden Struktur verbunden ist,

- und daß der Wagen mit an Verbindungsstücken (56) befestigten seitlichen Rädern (54) versehen ist, die zwischen einer nach innen gefalteten Position und einer äußeren, dem Kontakt mit dem zu reinigenden Fahrzeug dienenden Position beweglich sind.

2. Vorrichtung nach Anspruch 1, dadurch gekennzeichnet, daß eines oder mehrere der Räder des Wagens von einem Luftmotor angetrieben werden, der über einen zweiten Schlauch (58) versorgt wird, der von einer anderen Winde (20) im Zuge der Fortbewegung des Wagens aus der zurückgezogenen Position abgewickelt wird, und daß der Luftmotor durch den Kontakt einer auf dem Wagen angeordneten Sonde (50) mit einer Abschlußwand des Fahrzeuges angehalten wird, wobei der Sensor außerdem ein Umdrehen des Schlauchwindenmotors (24) bewirkt, um beide Schläuche aufzuwickeln und den Wagen in die zurückgezogene Position zu ziehen.

3. Vorrichtung nach Anspruch 2, wobei der Wagen einen Arm umfaßt, der mittels eines zweiten Luftmotors um die Drehachse des Wagens von der festehenden Struktur wegdrehbar ist, wobei der Arm einen oder mehrere Sprühköpfe trägt, und wobei der Schlauchwindenmotor (24) als dritter Luftmotor ausgebildet ist.

4. Vorrichtung nach Anspruch 1, wobei die feststehende Struktur eine den Wagen in der zurückgezogenen Position aufnehmende Rampe enthält, und wobei die Rampe an einer horizontalen Achse drehbar gelagert ist.

Fig.1

EP 0 256 699 B1

Fig. 2

*Fig. 3*

EP 0 256 699 B1

Fig. 4

*Fig. 5*